(19) Europäisches Patentamt
European Patent Office
Office européen des brevets

(11) Veröffentlichungsnummer: **0 143 986**
**A1**

# (12) EUROPÄISCHE PATENTANMELDUNG

(21) Anmeldenummer: **84112967.9**

(22) Anmeldetag: **27.10.84**

(51) Int. Cl.⁴: **C 10 K 1/30**
C 10 J 3/57, C 21 B 13/00

(30) Priorität: **25.11.83 DE 3342600**

(43) Veröffentlichungstag der Anmeldung:
**12.06.85 Patentblatt 85/24**

(84) Benannte Vertragsstaaten:
**BE FR GB LU**

(71) Anmelder: **Fried. Krupp Gesellschaft mit beschränkter Haftung**
**Altendorfer Strasse 103**
**D-4300 Essen 1(DE)**

(72) Erfinder: **Radke, Dietrich, Dr.**
**An der Hoffnung 16**
**D-4030 Ratingen 5(DE)**

(54) **Verfahren zum Entschwefeln von Reduktionsgas.**

(57) Bei einem Verfahren zum Entschwefeln von direkt als Prozeßgas eingesetztem Reduktionsgas mittels basischer Feststoffe wird das Abscheiden des Schwefels aus dem Gas bei hohen Temperaturen dadurch erzielt, daß die feinkörnigen basischen Feststoffe in einem mit dem Reduktionsgas nicht reagierenden Fördergas transportiert, dem heißen Reduktionsgas eingangs einer als Reaktionseinrichtung ausgebildenten Förderstrecke (5) zugemischt und nach dem Passieren der Förderstrecke in beladenem Zustand und ggf. zusammen mit anderen staubförmigen Verunreinigungen wieder abgeschieden werden. Das Verfahren ist vorzugsweise zum Entschwefeln von Reduktionsgas bestimmt, das in einem Eisenbadreaktor (1) erzeugt wird.

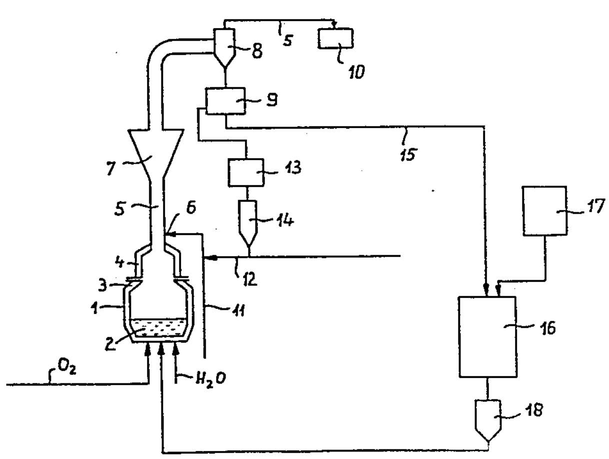


EP 0 143 986 A1

Croydon Printing Company Ltd.

FRIED. KRUPP GESELLSCHAFT MIT BESCHRÄNKTER HAFTUNG
in Essen

Verfahren zum Entschwefeln von Reduktionsgas

Die Erfindung bezieht sich auf ein Verfahren zum Entschwefeln von direkt als Prozeßgas eingesetztem Reduktionsgas mittels basischer Feststoffe, inbesondere von Reduktionsgas, das in einem Eisenbadreaktor erzeugt wird.

Die bekannten Verfahren zum Entschwefeln von Reduktionsgasen, die aus schwefelhaltigen fossilen Brennstoffen, z. B. durch die verschiedenen Kohlevergasungsverfahren, erzeugt werden, erfolgt bei tiefen Temperaturen. Bei Anwendung dieses entschwefelten Reduktionsgases für einen Reduktionsprozeß muß das Gas dementsprechend wieder auf Reduktionstemperatur gebracht werden, was mit erheblichen Energieverlusten verbunden ist.

Bei einem anderen bekannten Verfahren, bei dem Reduktionsgas in einem Eisenbadreaktor erzeugt wird, indem Feinkohle und Sauerstoff in das Eisenbad eingegeben wird, wird der größte Teil des mit der Kohle zugesetzten Schwefels vom Eisenbad aufgenommen und dann in die über dem Eisenbad aufgebaute basische Schlacke überführt. Mit dem Abführen der verbrauchten Schlacke wird der Schwefel ebenfalls entfernt. Ein Teil des mit dem Brennstoff eingebrachten Schwefels geht jedoch in das erzeugte Reduktionsgas über. Dieser lagert sich an dem im Prozeß entstehenden Staub an, der im wesentlichen aus feinsten Eisenteilen besteht und geringe Anteile der Schlacke enthält. Die Anlagerung ist umso größer, je niedriger die Temperaturen des Reduktionsgases sind. Unterhalb von 600 °C ist diese Anlagerung

fast vollständig. Nachteilig ist hierbei, daß die Abscheidung solcher Stäube von höchster Feinheit große Schwierigkeiten bereitet. Außerdem ist in einem solchen Fall für den Einsatz des Gases in einem Reduktionsprozeß die erneute Aufheizung auf Reduktionstemperaturen, also auf etwa 900 °C erforderlich. Erfolgt keine Zwischenabkühlung, lagert sich nur ein geringer Anteil der Schwefelverbindungen an dem Staub an, der größte Anteil verbleibt im Reduktionsgas und wird mit diesem dem nachgeschalteten Reduktionsprozeß zugeführt.

Der Erfindung liegt die Aufgabe zugrunde, bei einem Verfahren der eingangs genannten Art ein schwefelfreies Reduktionsgas ohne Zwischenabkühlung zu erzeugen. Die Lösung dieser Aufgabe besteht in den Merkmalen des kennzeichnenden Teils des Anspruchs 1.

Das neue Verfahren ist für die bekannten Verfahren zur Herstellung von Reduktionsgas aus fossilen Brennstoffen, den sogenannten Kohlevergasungsverfahren, anwendbar, insbesondere für solche, bei denen die erzeugten Reduktionsgase ein sehr geringes Sauerstoffpotential aufweisen. Von besonderem Vorteil ist die Anwendung auf im Eisenbadreaktor erzeugte Reduktionsgase, die in einem dem Eisenbadreaktor vorgeschalteten Direktreduktionsprozeß verwendet werden. Auf diese Weise kann ein Stahlerzeugungsprozeß kontinuierlich und in sich geschlossen ablaufen.

Weitere vorteilhafte Ausgestaltungen der Erfindung sind in den Ansprüchen 2 bis 11 wiedergegeben.

Als basische Feststoffe kommen die bekannten Entschwefelungsmittel, wie Dolomit, Soda, Magnesia, in Betracht. Bevorzugt ist der Einsatz von gebranntem Kalk vorgesehen. Als Fördergase kommen alle nicht mit dem Reduktionsgas reagierenden Gase in Frage, aus Kostengründen in erster Linie jedoch Stickstoff und Kohlenmonoxid.

Die basischen Feststoffe werden am Anfang der als Reaktionseinrichtung ausgebildeten Förderstrecke durch mehrere dort angeordnete Düsen, die auf den Umfang der Förderstrecke verteilt sind und ggf. in mehreren Durchmesserebenen angeordnet sind, mittels des Fördergases so eingeblasen, daß unter Durchwirbelung eine gute Vermischung der zugegebenen Stoffe mit dem Reduktionsgas erzielt wird. Die Länge und der bzw. die Durchmesser der Förderstrecke sind so eingestellt, daß bei einer Strömungsgeschwindigkeit von 8 bis 20 m/s des Reduktionsgases eine Verweilzeit des Gases in der Förderstrecke von 5 bis 20 Sekunden gewährleistet ist. Die Abbindung der im heißen Reduktionsgas vorhandenen Schwefelverbindungen wie $H_2S$ und COS zu Schwefeldioxid findet am vollständigsten bei etwa 700 $^oC$ statt. Bei höheren Temperaturen bis hinauf zu 1400 $^oC$ nimmt sie jedoch nur geringfügig ab, so daß auch bei Temperaturen in der Höhe, wie sie für ein Direktreduktionsverfahren erforderlich sind, annähernd optimale Verhältnisse für eine Schwefelabbindung vorhanden sind.

Der Einblasstrom für die basischen Feststoffe ist etwa quer zur Strömungsrichtung der Reduktionsgase gerichtet und dabei bevorzugt leicht entgegen der Strömungsrichtung abgewinkelt. Um die Förderstrecke zu verkürzen, wird bevorzugt in ihr eine überkritische Wirbelschicht aus den basischen Feststoffen und ggf. aus Staub ausgebildet. Dafür ist ein Wirbeltrichter vorgesehen, dessen Abmessungen für den einzelnen Anwendungsfall aus dem $Fr_K 2 \cdot \frac{\gamma_G}{\gamma_K - \gamma_G}$, $Re_K$-Diagramm aus der Dissertation von Reh "Das Wirbeln von körnigem Gut im schlanken Diffusor als Grenzzustand zwischen Wirbelschicht und pneumatischer Förderung", TH Karlsruhe, Mai 1961,

Seite 36, errechnet werden können.

Die in einer für die vollständige Schwefelabbindung ausreichenden Menge zugeführten basischen Feststoffe weisen als klassiertes Material Korngrößen auf, die etwa zwischen 200 und 2000 µ liegen.

Zur Abscheidung der mit den mit Schwefel beladenen basischen Feststoffe ist am Ende der Förderstrecke vorzugsweise ein Zyklon eingesetzt, der so ausgelegt ist, daß auch die untere Kornfraktion der Feststoffe bei der herrschenden Temperatur abgeschieden wird. Die Abmessungen des Zyklons richten sich dabei zweckmäßig nach Angaben von Muschelknautz, wiedergegeben im Aufsatz "Auslegung von Zyklonabscheidern in der technischen Praxis", Staub 30 (1970), Seiten 187 bis 195.

Eine weitere vorteilhafte Ausgestaltung des Verfahrens nach der Erfindung besteht darin, daß der Abscheidung aus der Förderstrecke eine Siebung der beladenen Feststoffe nachgeschaltet ist. Der Siebrückstand, also die gröberen Teilchen der Feststoffe, werden, da sie in der Regel noch nicht verbraucht sind, vorteilhaft in den Kreislauf zusammen mit den frischen basischen Feststoffen zurückgeführt. Auf diese Weise werden größere Mengen an basischen Feststoffen eingespart. Die durchgesiebten kleineren Kornfraktionen werden zusammen mit dem abgebundenen angelagerten Schwefel, der also in der Regel als CaS vorliegt, aus dem Prozeß ausgeschieden. Das Verhältnis zwischen der abgeschiedenen und zurückgeführten Kornfraktion kann durch entsprechende Einstellung des Siebes oder einer anderen geeigneten Trennvorrichtung auf die jeweils günstigsten Werte eingestellt werden.

Anhand des in der Zeichnung gezeigten Flußbildes wird ein Ausführungsbeispiel des Verfahrens nach der Erfindung nachfolgend näher erläutert, bei dem das Reduktionsgas in einem Eisenbadreaktor erzeugt wird.

Im Eisenbadreaktor 1 wird in ein flüssiges Eisenbad 2 von etwa 100 t, einer Temperatur von etwa 1400 °C und einem Kohlenstoffgehalt von etwa 3 % durch an sich bekannte Bodendüsen Sauerstoff in einer Menge von etwa 260 Norm-$m^3$/min und Feinkohle in einer Menge von etwa 420 kg/min eingeblasen. Die Feinkohle hat folgende Zusammensetzung:

| | |
|---|---|
| 78 | % C |
| 8,5 | % flüchtige Bestandteile |
| 16 | % Asche |
| 1,3 | % S. |

Die Asche enthält etwa

| | |
|---|---|
| 53 | % $SiO_2$ |
| 30 | % $Al_2O_3$ |
| 5 | % CaO |
| 2 | % MgO |
| 6 | % $Fe_2O_3$ |
| 2 | % Rest (Alkalien u.a.). |

Dem Bad wird ferner überhitzter Wasserdampf in einer Menge von etwa 70 kg/min zugeführt, der dazu dient, die Temperatur des Eisenbades auf die genannte Temperatur von 1400 °C einzuregeln und gleichzeitig Wasserstoff als reduzierenden Bestandteil des Reduktionsgases zu erzeugen. Die entstehende Reduktionsgasmenge beträgt etwa 800 Norm-$m^3$/min.

An die Mündung 3 des als Konverter ausgebildeten Eisenbadreaktors 1 ist lösbar eine Fanghaube 4 angeschlossen, durch die das Reduktionsgas in eine in die Fanghaube 4 einmündende Gasleitung 5 als Förderstrecke gelangt. Eingangs der Gasleitung 5 ist ein Kranz von auf den Umfang der Leitung gleichmäßig verteilten Einblasdüsen 6 angeordnet, die quer zur Achse der Gasleitung 5 angestellt sind und in ihrem Winkel zu dieser Achse geringfügig verstellbar sind. In die Gasleitung 5 ist ein Wirbeltrichter 7 sowie ein Zyklon 8 eingeschaltet, dessen Austragstrichter mit einer Siebvorrichtung 9 verbunden ist. Die Gasleitung 5 mündet in eine Reduktionseinrichtung 10, aus welcher in dieser erzeugter Eisenschwamm dem Eisenbadreaktor 1 zum Einschmelzen zugeführt wird.

Durch die Düsen 6 wird klassierter Weichbranntkalk mit Korngrößen von 200 bis 1000 $\mu$ in einer Menge von etwa 170 kg/min und außerdem Feinkohle in einer Menge von etwa 40 kg/min dem heißen Reduktionsgas in der Leitung 5 zugeführt. Diese Mengenströme werden in gereinigtem Reduktions-Rücklaufgas transportiert, das in der Reduziereinrichtung 10 im Überschuß anfällt. Die Rücklaufgasmenge beträgt insgesamt etwa 480 Norm-$m^3$/min und ist auf etwa 250 $^{\circ}C$ vorgeheizt. Der mit den Düsen 6 ausgestatteten Zuführleitung 11 für den frischen Kalk ist eine weitere Leitung 12 zugeschaltet, über die ebenfalls in gereinigtem Reduktions-Rücklaufgas Kalk zugegeben wird. Dabei handelt es sich um zum Teil mit Schwefelverbindungen beladenen aber noch nicht verbrauchten Feststoffteilen, die den Siebrückstand der Siebvorrichtung 9 darstellen. Diese gröberen Fraktionen der aus dem Zyklon 8 abgeschiedenen Feststoffe werden in einem Bunker 13 gesammelt und über einen pneumatischen Druckzuteiler 14 dosiert in die Leitung 12 eingegeben. Der Zusatz an Feinkohle

dient dazu, im Reduktionsgas enthaltene Kohlendioxid- und Wasserdampfanteile zu reduzieren.

Die von der Siebvorrichtung 9 durchgesiebte Feinkornfraktion des Kalks wird über eine Leitung 15 einem Mischer 16 zugeführt, und dort mit aus einem Bunker 17 zugeleiteter Feinkohle vermischt. Diese Mischung wird mittels eines pneumatischen Druckzuteilers 18 durch Bodendüsen in den Eisenbadreaktor 1 eingeleitet. Die auf diese Weise erfolgte Kalkzufuhr wird so eingestellt, daß sie zur Bildung einer basischen Schlacke über dem Eisenbad ausreicht, deren $\frac{CaO}{SiO_2}$-Verhältnis etwa bei 2,5 liegt. Mit dem Abführen der verbrauchten Schlacke wird gleichzeitig der Schwefel aus dem Verfahrens-Kreislauf ausgeschieden.

Entsprechend der gewünschten Basizität der Schlacke, die nach der vorgenannten Definition zwischen 1 und 3 liegen sollte, kann die Siebvorrichtung eingestellt werden. Im vorhergehenden Ausführungsbeispiel ist diese Einstellung so durchgeführt, daß der Siebdurchgang unter 500 $\mu$ liegt. Bei einem geringeren Asche-Anteil der in das Eisenbad eingeleiteten Feinkohle kann die durchgesiebte Fraktion und damit die dem Eisenbadreaktor zugeführte Kalkmenge verringert werden. Bei einem Asche-Anteil von etwa 8 % erhält man eine Kalk-Zugabe von etwa 50 kg/min, was dann einer Kornfraktion des Siebdurchgangs von kleiner als 300 $\mu$ entspricht.

Die Strömungsgeschwindigkeit des Reduktionsgases in der Gasleitung 5 wird durch Regulierung des Überdrucks im Eisenbadreaktor 1 eingestellt. In anderen Verfahren, in denen kein Eisenbadreaktor eingesetzt wird, kann die Geschwindigkeit in bekannter Weise durch ein Saugzug- oder Druckgebläse eingestellt und reguliert werden.

## Ansprüche

1. Verfahren zum Entschwefeln von direkt als Prozeßgas eingesetztem Reduktionsgas mittels basischer Feststoffe, insbesondere von Reduktionsgas, das in einem Eisenbadreaktor erzeugt wird, dadurch gekennzeichnet, daß die feinkörnigen basischen Feststoffe in einem mit dem Reduktionsgas nicht reagierenden Fördergas transportiert, dem heißen Reduktionsgas eingangs einer als Reaktionseinrichtung ausgebildeten Förderstrecke zugemischt und nach dem Passieren der Förderstrecke in beladenem Zustand und ggf. zusammen mit anderen staubförmigen Verunreinigungen wieder abgeschieden werden.

2. Verfahren nach Anspruch 1, dadurch gekennzeichnet, daß die basischen Feststoffe in den Strom des heißen Reduktionsgases über den Umfang der Reaktionseinrichtung verteilt in einem Winkel zur Strömungsrichtung des Gases eingeblasen werden.

3. Verfahren nach Anspruch 2, dadurch gekennzeichnet, daß der Winkel 60 bis 120°, bevorzugt 100 bis 120° beträgt.

4. Verfahren nach einem der vorhergehenden Ansprüche, dadurch gekennzeichnet, daß durch entsprechende Abstimmung der Abmessungen der Reaktionseinrichtung und der Gasgeschwindigkeit die basischen Feststoffe in der Förderstrecke in der Schwebe gehalten und an deren Ende über einen Zyklon abgetrennt werden.

5. Verfahren nach Anspruch 4, bei dem das heiße Reduktionsgas mit staubförmigen Verunreinigungen beladen ist, dadurch gekennzeichnet, daß in der Förderstrecke eine überkritische Wirbelschicht aus den basischen Feststoffen und ggf. aus Staub ausgebildet wird.

6. Verfahren nach einem der vorhergehenden Ansprüche, dadurch gekennzeichnet, daß die ausgeschiedenen basischen Feststoffe gesiebt und der Siebrückstand im Kreislauf zurückgeführt und den frischen basischen Feststoffen wieder zugemischt wird.

7. Verfahren nach einem der vorhergehenden Ansprüche, dadurch gekennzeichnet, daß vorgeheiztes Fördergas eingesetzt wird.

8. Verfahren nach einem der vorhergehenden Ansprüche, bei dem das Reduktionsgas in einem Eisenbadreaktor erzeugt und in einem diesem vorgeschalteten Direktreduktionsprozeß eingesetzt wird, dadurch gekennzeichnet, daß als Fördergas Rücklauf-Reduktionsgas eingesetzt wird.

9. Verfahren nach Anspruch 8, dadurch gekennzeichnet, daß die abgeschiedenen beladenen Feststoffe zumindest zum Teil in den Eisenbadreaktor eingeleitet werden.

10. Verfahren nach Anspruch 9, dadurch gekennzeichnet, daß die Siebung so eingestellt wird, daß der Siebdurchgang zur Bildung einer basischen Schlacke im Eisenbadreaktor ausreicht.

11. Verfahren nach Ansprüchen 8 bis 10, dadurch gekennzeichnet, daß den basischen Feststoffen Feinkohle zugemischt wird.

1/1

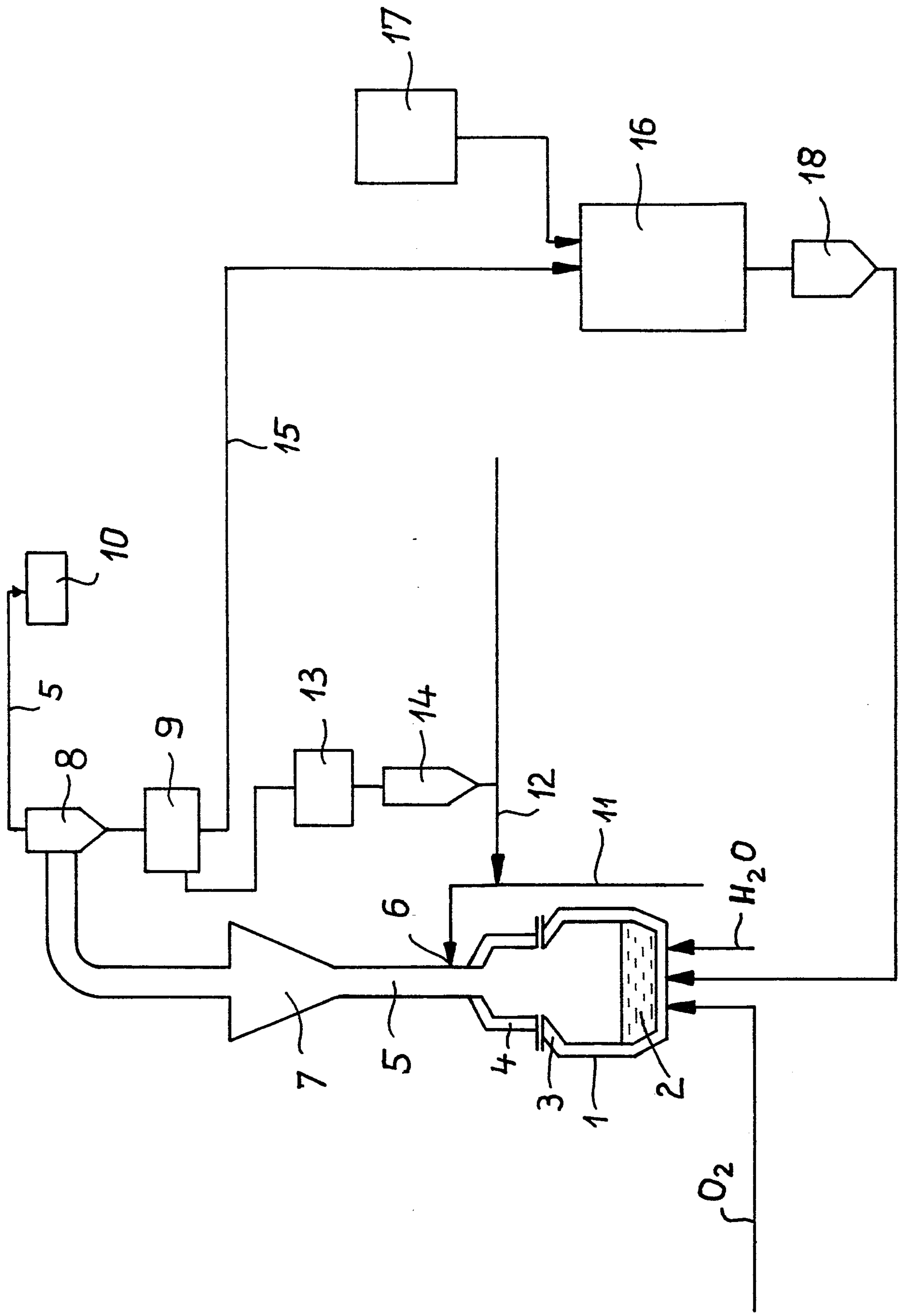

Europäisches Patentamt

# EUROPÄISCHER RECHERCHENBERICHT

0143986

Nummer der Anmeldung

EP 84 11 2967

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | EP-A-0 042 638 (METALLGESELLSCHAFT AG) * Seite 7, Zeile 30 - Seite 10, Zeile 6; Abbildung * | 1,4 | C 10 K 1/30<br>C 10 J 3/57<br>C 21 B 13/00 |
| A | | 2,3 | |
| | --- | | |
| Y | DE-A-2 750 725 (KLÖCKNER-HUMBOLDT-DEUTZ) * Seite 13, Zeile 13 - Seite 18, Zeile 4; Abbildung 1 * | 1,4 | |
| A | | 9 | |
| | --- | | |
| A | US-A-4 260 412 (F.U. SUMMERS) * Spalte 3, Zeile 16 - Spalte 4, Zeile 60; Abbildung * | 11 | RECHERCHIERTE SACHGEBIETE (Int Cl 4) |
| | --- | | |
| A | GB-A-2 078 779 (KLÖCKNER-HUMBOLDT-DEUTZ) | | C 10 K<br>C 10 J<br>C 21 B |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 26-11-1984 | PYFFEROEN K. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82